# EUROPÄISCHE PATENTANMELDUNG

(11) **EP 2 136 170 A2**
(43) Veröffentlichungstag der Anmeldung: **23.12.2009**
(21) Anmeldenummer: 09156123.3
(22) Anmeldetag: 25.03.2009
(51) Int. Cl.: F26B 1/00, F26B 7/00, F26B 23/00

(54) **Vorrichtung und Verfahren zur Energieträgergewinnung aus feuchter Biomasse**

(30) Priorität: 19.06.2008 DE 102008028860
(71) Anmelder: CLAAS Selbstfahrende Erntemaschinen GmbH, 33428 Harsewinkel (DE)
(72) Erfinder: Weigelt, Dr. Horst, 33330, Gütersloh (DE)

(57) **Zusammenfassung**

Eine Vorrichtung zur Energieträgergewinnung aus feuchter Biomasse umfasst eine Entwässerungseinrichtung (1, 3) zum mechanischen Vorentwässern der Biomasse und eine Trocknerstufe (7) zum Nachentwässern der vorentwässerten Biomasse durch Wärmezufuhr. Die Entwässerungseinrichtung umfasst eine erste Entwässerungsstufe (1) und eine zweite Entwässerungsstufe (3), die mit der Trocknerstufe (7) in einer Baugruppe zusammengefasst ist.

## Beschreibung

Die vorliegende Erfindung befasst sich mit der energietechnischen Nutzbarmachung von feuchter Biomasse, insbesondere von Getreide und vor allem von Mais.

Die energietechnische Nutzung von trockenem Getreide wird vereinzelt praktiziert, trifft aber auf e-thische Vorbehalte, da es theoretisch für die menschliche Ernährung genutzt werden könnte. Feucht geerntetes Getreide, das herkömmlicherweise nur zur Viehfütterung verwendet wird, begegnet solchen Vorbehalten nicht. So benötigt Mais, der in großen Teilen Europas als Viehfutter angebaut wird, zum Ausreifen häufig eine längere Vegetationszeit als das Klima zulässt. Er muss daher in feuchtem Zustand, in einer für die menschliche Ernährung ungeeigneten Qualität geerntet werden.

Ein Problem bei der energietechnischen Nutzung von Biomasse, egal welcher Art, ist ihr Wassergehalt. Ein hoher Wasseranteil beeinträchtigt die Lagerfähigkeit der Biomasse, führt zu hohen Transportkosten, reduziert die Energieausbeute bei der Verbrennung und beeinträchtigt die Abgasqualität. Eine Trocknung der Biomasse im Freien beansprucht viel Zeit und große Flächen, und eine Trocknung durch Erhitzen erfordert oft mehr Energie, als durch die Verbrennung der trockenen Biomasse erzeugt werden kann.

Aus DE 10 2004 003 011 A1 ist eine gattungsgemäße Vorrichtung mit einer Entwässerungseinrichtung zum mechanischen Vorentwässern der Biomasse und einer Trocknerstufe zum machentwässern der vorentwässerten Biomasse durch Wärmezufuhr bekannt. Auch hier hängt der Einsatz an Primärenergie, der erforderlich ist, um die Biomasse für eine Weiterverarbeitung zur direkten oder indirekten Nutzung als Energieträger brauchbar zu machen, kritisch ab von dem Grad der mit der mechanischen Entwässerungseinrichtung erzielbaren Vorentwässerung und dem Wirkunggrad der Trocknerstufe.

Aufgabe der vorliegenden Erfindung ist daher, eine Technik zu schaffen, die es mit minimalem Energieeinsatz ermöglicht, in kurzer Zeit in einer kompakten Anlage feuchte Biomasse soweit zu entwässern, dass sie in wirtschaftlicher Weise energietechnisch nutzbar wird.

Die Aufgabe wird zum einen dadurch gelöst, dass bei einer Vorrichtung zur Energieträgergewinnung aus feuchter Biomasse der oben angegebenen Art die Entwässerungseinrichtung eine erste Entwässerungsstufe und eine zweite Entwässerungsstufe umfasst, die mit der Trocknerstufe in einer Baugruppe zusammengefasst ist. Die Zweiteilung der Entwässerungseinrichtung trägt der Tatsache Rechnung, dass die frisch geerntete Biomasse meist einen Wasseranteil von 80% oder darüber hat, und dass durch die Albtrennung eines substantiellen Teils dieses Wassers der Materialdurchsatz erheblich abnimmt, die Konsistenz des Materials sich aber gleichzeitig erheblich ändert. Die Zweiteilung kann dem Rechnung tragen, indem die zwei Entwässerungsstufen für deutlich unterschiedliche Materialdurchsätze entsprechend dem Masseverlust durch die in der ersten Stufe stattfindende Entwässerung ausgelegt werden, und indem unterschiedliche, jeweils an die Konsistenz des Materials angepasste Techniken und/oder Verarbeitungsparameter in der ersten und der zweiten Entwässerungsstufe zum Einsatz kommen. Indem die zweite Entwässerungsstufe, die aufgrund der verringerten zu bewältigenden Materialmenge kompakter als die erste ausgelegt sein kann, mit der Trocknerstufe in einer Baugruppe zusammengefasst wird, wird ein kompakter Aufbau erreicht, in dem aufgrund kurzer Wege der Energieaufwand für die Förderung des Materials minimiert ist.

Vorzugsweise umfasst die Trocknerstufe einen gleichzeitig mit der vorentwässerten Biomasse und einem Wärmeträgermaterial beschickbaren Mischbehälter. Indem in dem Mischbehälter die Biomasse mit dem Wärmeträgerimaterial in unmittelbaren Kontakt kommt, ist ein effizienterer und schnellerer Wärmeaustausch möglich als in jedem Wärmetauscher, der in herkömmlicher Weise ein Märmeträgermaterial und zu erhitzendes Material in voneinander getrennten Leitungen führt.

Zweckmäßigerweise umfasst die Vorrichtung eine Trennstufe zum Abscheiden des Wärmeträgermaterials von der nachentwässerten Biomasse. Durch die Trennstufe kann das Wärmeträgermaterial zurückgewonnen werden, um anschließend erneut erhitzt und zu trocknender vorentwässerter Biomasse wieder zugeführt zu werden. Die Trennstufe ist vorzugsweise in die Baugruppe der zweiten Entwässerungsstufe und der Trocknerstufe integriert.

Die Erwärmung der Trocknerstufe erfolgt vorzugsweise über einen Kreislauf des Märmeträgermaterials, der sich über eine Wärmequelle, die Trocknerstufe und die Trennstufe erstreckt.

Vorzugsweise ist das Wärmeträgermaterial brennbar. So beeinträchtigt ein in der nachentwässerten Biomasse zurückbleibender Rest des Wärmeträgermaterials dessen energietechnische Nutzung nicht. Im Gegenteil kann es die Handhabungseigenschaften der nachentwässerten Biomasse verbessern, indem sie diese zu dichten Brocken verklumpen lässt.

Um die Entwässerung der Biomasse in der zweiten Entwässerungsstufe zu effektivieren, ist vorzugsweise zwischen der ersten Entwässerungsstufe und der zweiten Entwässerungsstufe eine Zerkleinerungsstufe zum Zerkleinern der Biomasse nach Durchgang durch die erste Entwässerungsstufevorgesehen. Indem mittels der ersten Entwässerungsstufe zunächst schwach im Zellverbund der Biomasse gebundenes dasser beseitigt wird und erst anschließend die Biomasse zerkleinert wird, wird ein Material erhalten, dessen Zellgefüge durch den Wasserverlust in der ersten Entwässerungsstufe aufgelockert ist. Wasser, das in der zweiten Entwässerungsstufe aus den Zellen der Biomasse freigesetzt wird, kann in den zuvor erhaltenen Freiräumen des Zellverbands relativ leicht bis zu einer Schnittfläche des entsprechenden Biomassestücks vordringen und schließlich aus diesem austreten.

Vorzugsweise umfasst die erste Entwässerungsstufe wenigstens ein Presswalzenpaar, das einen von der Biomasse durchlaufenen Pressspalt begrenzt.

Die zweite Entwässerungsstufe umfasst vorzugsweise einen Dekanter oder eine Schneckenpresse, die beide zur schnellen Verarbeitung großer Mengen von zerkleinertem Material geeignet sind.

Eine Heizeinrichtung kann vorgesehen sein, um die die zweite Entwässerungsstufe durchlaufende Biomasse zu erhitzen. Die Erhitzung schließt den Zellverband des Materials weiter auf und erleichtert so zusätzlich die Entwässerung. Da diese Erhitzung nur dem weiteren Aufschluß der Zellen der Biomasse dient, nicht aber dazu, deren übrig gebliebene Feuchtigkeit zu verdampfen, ist der Leistungsbedarf der Heizeinrichtung gering im Vergleich zu der Heizleistung, die erforderlich wäre, um die Biomasse durch verdampfung zu trocknen.

Insbesondere kann die Trocknerstufe aufgrund der engen Nachbarschaft zur zweiten Entwässerungsstufe gleichzeitig als die oben erwähnte Heizeinrichtung dienen, wobei die Erhitzung des Ernteguts beim Durchlauf der zweiten Entwässerungsstufe praktisch kostenlos dadurch erreicht werden kann, dass die Trocknerstufe derart thermisch isoliert ist, dass die benachbarte zweite Entwässerungsstufe einen wiesentlichen Abflussweg bildet, über den die Wärme aus der Trocknerstufe ins Freie dringt.

Die Vorrichtung kann ferner einen Reaktor zum thermochemischen Behandeln der in der Trocknerstufe getrockneten Biomasse umfassen. In einem solchen Reaktor bei hoher Temperatur exotherm ablaufende Prozesse wie etwa das Verschwelen der Biomasse ermöglichen es, auch die Trocknerstufe im Wesentlichen mit Abwärme zu beheizen, in diesem Fall mit der des Reaktors.

Die Wärmezufuhr zur Trocknerstufe findet statt, indem heißes Reaktionsprodukt des Reaktors als Wärmeträgermaterial zugeführt wird. Da die Reaktionsprodukte den Reaktor im Allgemeinen mit hoher Temperatur verlassen, ist es allgemein wünschenswert, ein Reaktionsprodukt abzukühlen, bevor es zur Lagerung einem Tank zugeführt wird, und indem das Reaktionprodukt als Wärmeträgermaterial in der Trocknungstufe verwendet wird, kann seine ohnehin abzuführende Restwärme sinnvoll genutzt werden.

Es kann zweckmäßig sein, Wasserstoffgas in den Reaktor einzuspeisen, um den Restsauerstoffgehalt der darin enthaltenen Reaktionsprodukte zu reduzieren, bzw. das Wasserstoff-/Kohlenstoffverhältnis dieser Reaktionsprodukte und damit auch die Länge ihrer Kohlenstoffketten auf einen gewünschten Wert einzustellen.

Zur Gewinnung des wasserstoffs kann eine Elektrolysestufe dienen, die die in der Entwässerungseinrichtung abgeschiedenen Flüssigkeit elektrolysiert.

Um im Reaktor als Dampf freigesetzte Reaktionsprodukte aufzufangen, ist vorzugsweise eine Kondensationsstufe vorgesehen. In dieser wird auch Wasser, aufgefangen, das entweder mit der Biomasse eingetragen oder im Reaktor entstanden ist und das die Qualität des Kondensats beeinträchtigt. Um ein in der Kondensationsstufe erhaltenes wasserreiches Kondensat von Kohlenwasserstoff-Anteilen zu befreien, kann das Kondensat durch einen Filter geführt werden, der mit ebenfalls aus dem Reaktor herrührendem Koks als Filtermaterial beschickbar ist. In dieser Weise gereinigtes Wasser kann wie überschüssiges Wasser aus den mechanischen Entwässerungsstufen unmittelbar aufs Feld abgelassen werden. Der im Filter mit organischen Bestandsteilen gesättigte Koks kann - direkt oder indirekt - in den Reaktor zurückgeführt werden.

Gasförmige Reaktionsprodukte, insbesondere solche, die nach Durchlauf durch die Kondensationsstufe als nicht kondensierbar übrig bleiben, werden verzugsweise im Erntefahrzeug selbst als Energieträger genatzt, insbesondere in einem Brenner zum Beheizen des Reaktors.

Es kann ferner eine Konzentrationsstufe vorgesehen sein, die den in wenigstens einer der Entwässerungsstufen abgeschiedenen wässrigen Anteil empfängt, um diesen in einen an gelösten Stoffen gangereicherten und einen an gelösten Stoffen abgereicherten Anteil zu scheiden. Während der angereicherte Anteil im Allgemeinen zur Weiterverarbeitung in einem Tank des Erntefahrzeugs gesammelt werden wird, wird der abgereicherte Anteil vorzugsweise wie oben erwähnt aufs Feld abgelassen.

Insbesondere kann die Trocknerstufe aufgrund der engen Nachbarschaft zur zweiten Entwässerungsstufe gleichzeitig als die oben erwähnte Heizeinrichtung dienen, wobei die Erhitzung des Ernteguts beim Durchlauf der zweiten Entwässerungsstufe praktisch kostenlos dadurch erreicht werden kann, dass die Trocknerstufe derart thermisch isoliert ist, dass die benachbarte zweite Entwässerungsstufe wiesentlichen Abflussweg bildet, über den die Wärme aus Trocknerstufe ins Freie dringt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung von Verarbeitungseinrichtungen einer erfindungsgemäßen Vorrichtung; und
- Fig. 2: ein Detail aus Fig. 1.

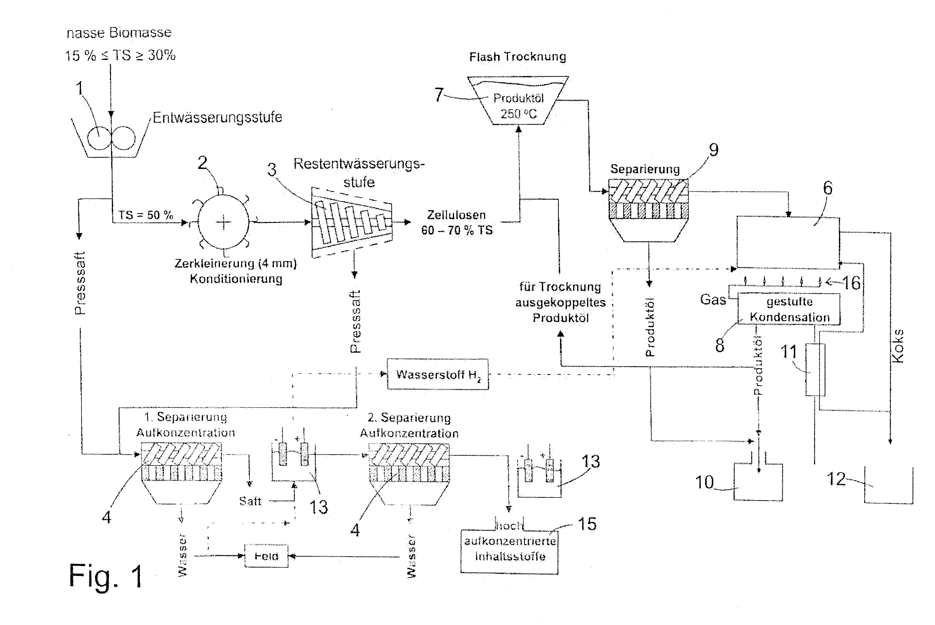

Die in Fig. 1 gezeigten und im Folgenden im Detail zu beschreibenden Vorrichtungen sind gemäß einer bevorzugten Ausgestaltung der Erfindung in einem Erntefahrzeug eingebaut. Eine Außenansicht des Erntefahrzeugs ist nicht geneigt, da seine äußere Gestalt, soweit sie nicht der eines herkömmlichen Mähdreschers oder Feldhäcksler gleicht, lediglich durch die Anforderung diktiert ist, die in Fig. 1 gezeigten Einrichtungen darin unterzubringen. Wie ein herkömmlicher Feldhäcksler oder Mähdrescher hat das Erntefahrzeug ein Fahrwerk, an dem vorne ein Erntegutaufnehmer austauschbar montiert ist. Der Erntegutaufnehmer ist mit dem eines herkömmlichen Feldhäckslern oder Mähdrescher identisch und austauschbar an diesem sowie am erfindungsgemäßen Erntefahrzeug verwendbar.

Zwei Presswalzen 1 bilden einen Spalt, dem die ge-Biomasse vom Aufnehmer zugeführt wird. Beim Durchgang zwischen den Presswalzen 1 verliert die Biomasse je nach Pflanzenart etwa die Hälfte ihres Wassers; nährend der Anteil der Trockenmasse bei der frisch aufgenommenen Biomasse zwischen 10 und 30 % beiträgt, ist der Anteil nach Durchgang durch die Presswalzen 1 auf 18 bis 46 % erhöht.

Die an den Presswalzen 1 vorentwässerte Biomasse durchläuft anschließend eine Häckselstufe 2, die wie bei einem Feldhäcksler eine rotierende Messerwalze und mit dieser zusammenwirkende ortsfeste Messer umfassen kann. Die Zerkleinerung ist intensiver als bei einem Feldhäcksler, zum Beispiel aufgrund einer engeren Staffelung der Messer oder einer erhöhten Verweildauer der Biomasse in der Häckselstufe 2, so dass beim Ausgang der Häckselstufe Teilchen mit einer typischen maximalen Größe von 4 mm erhalten werden.

Das zerkleinerte Material aus der Häckselstufe 2 wird einer zweiten Entwässerungsstufe 3, zum Beispiel einem Dekanter oder einer Siebzentrifuge, zugeführt. In Verbindung mit der intensiven Vorzerkleinerung ermöglicht dies eine Steigerung des Trockenmasseanteils auf 88 bis 98 Prozent. So wird ein faseriger, zellulosereicher Feststoff erhalten, dessen Masse nur noch zirka 10 bis 30 % der ursprünglich aufgenommenen Biomasse ausmacht.

Das von der zweiten Entwässerungsstufe 3 ausgegebenen entwässerte Material durchläuft eine Trocknungsstufe 7 und eine Trennstufe 9, bevor es in einen Flash-Pyrolysereaktor 6 eingespeist wird. Durch Erhitzung unter Luftabschluss in dem Reaktor 6 wird das zugeführte Material in einem kontinuierlichen Prozess umgesetzt in Wasser, diverse Kohlenwasserstoffe und einen im Wesentlichen aus Kohlenstoff bestehenden, als Koks bezeichneten Rest-Feststoffanteil. Die bei der hohen Temperatur des Reaktors 6 als Gas freigesetzten Reaktionsprodukte werden einer Kondensationsstufe 8 zugeführt und in Fraktionen mit unterschiedlichem Siedepunkt kondensiert. In der Kondensationsstufe 8 nicht kondensierbares Gas speist einen Brenner 16, der den Reaktor 6 beheizt.

In der Kondensationsstufe 8 findet eine fraktionierte Kondensation statt, wobei Parameter der Fraktionierung so festgelegt sind, dass eine Fraktion im wesentlichen das gesamte mit der Biomasse in den Reaktor 6 eingetragene sowie das durch die Pyrolysereaktionen darin erzeugte Wasser enthält, während wenigstens eine andere Fraktion, als Produktöl bezeichnet, im wesentlichen nur aus Kohlenwasserstoffen besteht. Das erhaltene Produktöl wird in einem Tank 10 gesammelt, mit Ausnahme eines Teils, vorzugsweise einer bei hoher Temperatur kondensierenden Fraktion, die ganz oder teilweise aus der Kondensationsstufe 8 abgezweigt wird, um in der Trocknungsstufe 7 der entwässerten Biomasse aus der zweiten Entwässerungsstufe 3 zugesetzt zu werden.

Die Trocknungsstufe 7 kann Knet- oder Rührwerkzeuge zum Vermengen des Produktöls mit der entwässerten Biomasse aufweisen. Die hohe Temperatur des Produktöls bringt die restliche Feuchtigkeit in der Biomasse zum Verdampfen, so dass ein Gemisch aus Produktöl und im Wesentlichen wasserfreier Biomasse am Ausgang der Trocknungsstufe 7 abgezogen werden kann.

Dieses Gemisch durchläuft, bevor es den Reaktor 6 erreicht, eine Trennstufe 9, in der das Produktöl unter Druck von der Biomasse wieder abgeschieden wird. Das in dieser Weise abgetrennte Produktöl wird zusammen mit dem nicht der Trocknungsstufe 7 zugeführten Anteil des Produktöl aus der Kondensationsstufe 8 in dem Tank 10 gesammelt.

Einer bevorzugten Weiterbildung zufolge ist zum Reinigen der in der Kondensationsstufe 8 erhaltenen, im Wesentlichen aus Wasser bestehenden Kondensatfraktion ein Filter 11 vorgesehen. Als Filtersubstrat verwendet dieses Filter 11 einen Teil des Kokses aus dem Reaktor 6, der im Gegenstrom zu der wässrigen Fraktion kontinuierlich durch den Filter 11 gefördert wird und sich dabei mit den organischen Bestandteilen der wässrigen Fraktion sättigt. Das durch die Filterung erhaltene Wasser kann - wenn erforderlich, nach einer Nachreinigung - auf den Acker ausgegeben werden; der mit den organischen Anteilen gesättigte Koks kann zusammen mit dem restlichen Koks aus dem Reaktor 6 in einem Bunker 12 als Brennmaterial gesammelt werden, oder er kann - je nach Grad seiner Sättigung mit Wasser beziehungsweise mit organischem Material - in den Reaktor 6 direkt, wie in der Fig. 1 dargestellt, oder auf dem Umweg über die Trocknungsstufe 7 zurückgeführt werden, um die organischen Anteile im Reaktor 6 wieder abzudestillieren und zum Produktöl hinzuzufügen.

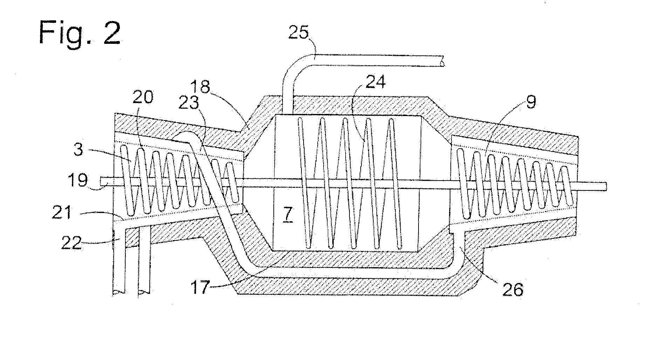

Die zweite Entwässerungsstufe 3, die Trocknungsstufe 7 und die Trennstufe 9 sind in einer in Fig. 2 schematisch dargestellten gemeinsamen Baugruppe zusammengefasst. Alle drei Stufen sind in einer gemeinsamen thermisch isolierenden Hülle 18 unmittelbar aneinander grenzend untergebracht. Rotierende Schrauben oder Schaufeln der drei Stufen können, wie dargestellt, über einer gemeinsame Welle 19 einheitlich angetrieben sein, oder es kann jeder Stufe ein eigener Motor zugeordnet sein, und die Stufen 3, 7, 9 haben jeweils voneinander unabhängige und mit einer an die Menge und Konsistenz des Materials jeder einzelnen Stufe anpassbarer Geschwindigkeit angetriebene Wellenstücke.

Die Entwässerungsstufe 3 hat eine kegelstumpfförmige Kammer, in der eine Schnecke 20 rotiert und dabei die Biomasse gegen eine Wand 21 der Kammer presst oder schleudert. Die Wand 21 ist auf einem Grossteil ihrer Oberfläche siebartig durchbrochen, so dass aus der Biomasse ausgepresste Feuchtigkeit die Wand 21 passiert und über einen Ablauf 22 zur Konzentrationsstufe 4 gelangt. Über andere Teile der Wand 21 ist ein Märmetauscherrohr 23 verteilt, das in der Figur schematisch als eine einzige um die Entwässerungsstufe 3 verlaufende Rohrschleife dargestellt ist, tatsächlich aber eine Vielzahl von Schleifen umfassen kann. Die Schnecke 20 fördert die Biomasse durch die Entwässerungsstufe 3 hindurch bis zu einem Ausgang an einer kleinen Grundfläche der kegelstumpfförmigen Kammer, an die sich die Trocknungsstufe 7 unmittelbar anschließt.

Die Trocknungsstufe umfasst einen zylindrischen oder tonnenartigen Behälter 17, in dem eine Schnecke oder Schaufelanordnung 24 das Material transporrund es mit über rohrleitung 25 am stromaufwärtigen Ende des Behälters 17 eingespeistem heißem Produktöl vom Reaktor 6 verknetet.

Das mit einer Temperatur von typischerweise 200 bis 250°C eingespeiste Produktöl bringt in der Biomasse enthaltenes Restwasser in kürzester Zeit weitgehend zum Verdampfen. Am Ausgang der Trocknungsstufe 7 wird so ein weitgehend wasserfreier Materialstrom erhalten, der je nach Mengenverhältnis von Biomasse und Produktöl darin eine breiige bis klumpige Konsistenz hat.

Dieses Material durchläuft die Trennstufe 9, deren Aufbau im Prinzip weitgehend dem der zweiten Entwässerungsstufe 3 gleichen kann. Anstelle von Masser wird in der Trennstufe 9 das Produktöl wieder extrahiert, und das so zurück gewonnene Produktöl gelangt über einen Ablauf 26 und den Wärmetauscher 23 in den (in Fig. 2 nicht dargestellten) Tank 10.

Die Trocknungsstufe 7 bzw. die in Fig. 2 gezeigte Anordnung der Stufen 3, 7, 9 ist auch in einem Erntefahrzeug mit vereinfachtem Aufbau anwendbar, bei dem der Reaktor 6 fehlt. In diesem Fall führt das Fahrzeug anstelle des Reaktors 6 einem Ölvorratstank sowie beliebige Mittel zum Erhitzen des Öls aus diesem Tank mit sich, um die Trocknungsstufe 7 mit heißem Öl zu versorgen. In der Trennstufe 9 wieder abgeschiedenes Öl wird in den Tank zurückgeführt oder umgehend wieder erhitzt, um der von der Entwässerungsstufe 3 gelieferten Biomasse wieder zugesetzt zu werden.

Ölverluste, die aus einer unvollständigen Abtrennung in der Trennstufe 9 resultieren, sind nicht übermäßig störend, da das in der Trennstufe 9 nicht wieder abgeschiedene Öl den Brennwert der von der Trennstufe 9 ausgegebenen trockenen Biomasse steigert und dieser eine stark verdichtete, klumpige, leicht zu handhabende Konsistenz verleiht.

Das in den Entwässerungsstufen 1 und 3 abgetrennte Wasser könnte im einfachsten Fall unmittelbar auf die Ackerfläche abgelassen werden. Zweckmäßig ist jedoch, die enthaltenen wirtschaftlich nutzbaren Bestandteile wie Zucker, Proteine, Stärken, Lipide, Säuren oder Mineralstoffe in einer Konzentrationsstufe 4, zum Beispiel einem Membranfilter oder mehreren in Reihe geschalteten derartigen Filtern, abzutrennen. Mit bekannten Filtrationstechniken kann so ein an werthaltigen Bestandteilen angereicherter Strom mit einem Trockenmasseanteil von bis zu 80 Prozent und von den werthaltigen Bestandteilen weitgehend befreites Nasser erzeugt werden, das aufs Feld abgelassen wird.

In einer Nachtrocknungsstufe kann der Feststoffanteil im angereicherten Strom auf bis zu 90 Prozent erhöht werden. Das so erhaltene Konzentrat wird in einem Tank 15 an Bord des Erntefahrzeugs für die Weiterverwertung, zum Beispiel als Futtermittel, als Rohstoff für die chemische Industrie oder als Rohstoff für Fermentationsprozesse zur Erzeugung von Biogas oder Ethanol gesammelt.

Einer anderen Weiterbildung der Erfindung zufolge ist eine Elektrolysezelle 13 vorgesehen, die mit dem angereicherten Anteil aus der Konzentrationsstufe 4 gespeist wird. Die Elektrolysezelle 13 ist mit frequenzmoduliertem Gleichstrom versorgt, zum eine hohe Wasserstoffausbeute bei reduziertem Energieeinsatz zu erreichen. Aus der Elektrolyse gewonnener Wasserstoff wird in den Pyrolysereaktor 6 eingespeist. Die damit erreichte Steigerung des Wasserstoffangebots im Reaktor 6 verbessert die Umsetzung des in der Biomasse gebundenen Sauerstoffs zu Wasser, so dass ein sauerstoffärmeres und damit qualitativ hochwertigeres Öl aus der Flash-Pyrolyse erhalten wird.

### Bezugszeichen

- 1: Entwässerungsstufe
- 2: Häckselstufe
- 3: Entwässerungsstufe
- 4: Konzentrationsstufe
- 5:
- 6: Pyrolysereaktor
- 7: Trocknungsstufe
- 8: Kondensationsstufe
- 9: Trennstufe
- 10: Tank
- 11: Filter
- 12: Bunker
- 13: Elektrolysezelle
- 14:
- 15: Tank
- 16: Brenner
- 17: Behälter
- 18: Hülle
- 19: Welle
- 20: Schnecke
- 21: Wand
- 22: Ablauf
- 23: Wärmetauscherrohr
- 24: Schaufelanordnung
- 25: Rohrleitung
- 26: Ablauf

## Patentansprüche

1. Vorrichtung zur Energieträgergewinnung aus feuchter Biomasse mit
a) einer Entwässerungseinrichtung (1, 3) zum mechanischen Vorentwässern der Biomasse und
b) einer Trocknerstufe (7) zum Nachentwässern der vorentwässerten Biomasse durch Wärmezufuhr,
**dadurch gekennzeichnet, dass** die Entwässerungseinrichtung eine erste Entwässerungstufe (1) und eine zweite Entwässerungsstufe (3) umfasst, die mit der Trocknerstufe (7) in einer Baugruppe zusammengefasst ist.

2. Vorrichtung nach Anspruch 1, **dadurch gekennzeichnet, dass** die Trocknerstufe (7) einen gleichzeitig mit der vorentwässerten Biomasse und mit einem Wärmeträgermaterial beschickbaren Mischbehälter (17) umfasst.

3. Vorrichtung nach Anspruch 2, **gekennzeichnet durch** eine Trennstufe (9) zum Abscheiden des Wärmeträgermaterials von der nachentwässerten Biomasse.

4. Vorrichtung nach Anspruch 3, **dadurch gekennzeichnet, dass** die Trennstufe (9) Teil der Baugruppe ist.

5. Vorrichtung nach Anspruch 3 oder 4, **gekennzeichnet durch** einen Kreislauf des Wärmeträgermaterials, der über eine Wärmequelle (6), die Trocknerstufe (7) und die Trennstufe (9) verläuft.

6. Vorrichtung nach einem der Ansprüche 2 bis 5, **dadurch gekennzeichnet, dass** das Wärmeträgermaterial brennbar ist.

7. Vorrichtung nach einem der vorhergehenden Ansprüche, **dadurch gekennzeichnet, dass** zwischen der ersten Entwässerungsstufe (1) und der zweiten Entwässerungsstufe (3) eine Zerkleinerungsstufe (2) zum Zerkleinern der Biomasse nach Durchgang durch die erste Entwässerungsstufe (1) vorgesehen ist.

8. Vorrichtung nach einem der vorhergehenden Ansprüche, **dadurch gekennzeichnet, dass** die erste Entwässerungsstufe (1) wenigstens ein einen von der Biomasse durchlaufenen Pressspalt begrenzendes Presswalzenpaar umfasst.

9. Vorrichtung nach einem der vorhergehenden Ansprüche, **dadurch gekennzeichnet, dass** die zweite Entwässerungsstufe (3) einen Dekanter oder eine Schneckenpresse umfasst.

10. Vorrichtung nach einem der vorhergehenden Ansprüche, **gekennzeichnet durch** eine Heizrichtung (23) zum Erhitzen der die zweite Entwässerungsstufe (3) durchlaufenden Biomasse.

11. Vorrichtung nach einem der vorhergehenden Ansprüche, **gekennzeichnet durch** einen Reaktor (6) zum thermochemischen Behandeln der in der Trocknerstufe (7) getrockneten Biomasse.

12. Vorrichtung nach Anspruch 11, **dadurch** beikennzeichnet, dass die Trocknerstufe (7) mit Abwärme des Reaktors (6) beheizbar ist.

13. Vorrichtung nach Anspruch 12, **dadurch gekennzeichnet, dass** die Abwärme in Form von Reaktionsprodukt des Reaktors (6) als Wärmeträgermaterial zugeführt wird.

14. Vorrichtung nach einem der Ansprüche 11 bis 13, **gekennzeichnet durch** Mittel zum Einspeisen von Wasserstoffgas in den Reaktor.

15. Vorrichtung nach Anspruch 14, **gekennzeichnet durch** eine Elektrolysezelle (13) zur Gewinnung von Wasserstoff aus der Biomasse entzogenem Wasser.

16. Vorrichtung nach einem der Ansprüche 11 bis 15, **gekennzeichnet durch** eine Kondensationsstufe (8) zum Kondensieren dampfförmiger Produkte des Reaktors (6) und Ausscheiden eines wasserhaltigen Kondensats, und einem Filter (11), der von dem wasserhaltigen Kondensat durchflossen und mit Koks aus dem Reaktor (6) als Filtermaterial beschickbar ist.

17. Vorrichtung nach einem der Ansprüche 11 bis 16, **dadurch gekennzeichnet, dass** ein Brenner (16) zum Beheizen des Reaktors (6) mit gasförmigem Reaktionsprodukt des Reaktors (6) gespeist ist.

18. Vorrichtung nach einem der vorhergehenden Ansprüche, **gekennzeichnet durch** eine Konzentratorstufe (4), die die in wenigstens einer der Entwässerungsstufen (1, 3) abgeschiedene Flüssigkeit empfängt, zum Scheiden der Flüssigkeit in einen an gelösten Stoffen angereicherten und einen an gelösten Stoffen abgereicherten Anteil.

19. Vorrichtung nach einen der vorhergehenden Ansprüche, **dadurch gekennzeichnet, dass** sie ein selbstfahrendes Erntefahrzeug ist.

20. Vorrichtung nach einem der vorhergehenden Ansprüche, **gekennzeichnet durch** einen Sammeltank (15) für in der Entwässerungseinrichtung abgeschiedene Flüssigkeit.

21. Verfahren zur Energieträgergewinnung aus feuchter Biomasse mit den Schritten
a) mechanisches Vorentwässern der Biomasse,
b) Trocknen der vorentwässerten Biomasse,
**dadurch gekennzeichnet, dass** das mechanische Vorentwässern zwei aufeinander folgende Entwässerungsschritte umfasst, von denen der zweite unter Wärmezufuhr abläuft.
